# EUROPÄISCHE PATENTANMELDUNG

(11) **EP 2 251 561 A2**
(43) Veröffentlichungstag der Anmeldung: **17.11.2010**
(21) Anmeldenummer: 10004097.1
(22) Anmeldetag: 17.04.2010
(51) Int. Cl.: F16F 9/02

(54) **Schalter zum Auslösen eines Schaltvorgangs, insbesondere zum Auslösen einer Gasdruckfeder**

(30) Priorität: 11.05.2009 DE 102009003013
(71) Anmelder: Veyhl GmbH, 75389 Neuweiler (DE)
(72) Erfinder: Hörmann, Jürgen, 75365 Calw (DE)
(74) Vertreter: Kohler Schmid Möbus

(57) **Zusammenfassung**

Die Erfindung betrifft einen Schalter 10 zum Auslösen eines Schaltvorgangs, insbesondere zum Auslösen einer Gasdruckfeder an und/oder in Möbelstücken, mit einem Grundkörper 16 und einem beweglich gelagerten Auslöser 20, der entgegen einer ersten Rückstellkraft von einer Ruhestellung in eine Auslösestellung bewegbar ist, wobei ein beweglich gelagertes Sicherungselement 28 am Schalter 10 angeordnet ist, das entgegen einer zweiten Rückstellkraft von einer Verriegelungsstellung in eine Freigabestellung bewegbar ist, wobei das Sicherungselement 28 in der Verriegelungsstellung den Auslöser 20 in der Ruhestellung verriegelt. Durch den erfindungsgemäßen Schalter 10 ist ein unbeabsichtigtes Betätigen des Auslösers 20 nicht möglich, sodass eine sichere Benutzung des Schalters gewährleistet ist.

## Beschreibung

Die Erfindung betrifft einen Schalter an einem Möbelstück zum Auslösen von Gasdruckfedern.

Sitze, Tische oder andere Möbelstücke weisen üblicherweise Schalter bzw. Bedienelemente auf, mit denen z.B. eine Höhenverstellung oder ein Verschwenken bestimmter Möbelteile (Tischplatte, Sitzlehne, etc.) vorgenommen werden kann.

Diese Schalter oder Bedienelemente lösen dann häufig über Seilzüge, Gestänge oder ähnliches eine Gasdruckfeder aus, die den Bediener bei einer Höhenverstellung oder einem Verschwenken von Möbelteilen unterstützt, indem beispielsweise die Gewichtskraft einer Tischplatte oder eines Bürostuhls überwunden wird. Somit ist es dem durchschnittlichen Bediener möglich z.B. eine Tischplatte durch Verschwenken schrägzustellen (Schrägstellen der Tischplatte zum Zeichnen oder lediglich zum Arbeiten in einer angenehmen Sitzposition), oder eine Tischplatte in der Höhe zu verstellen z.B. von der Sitzin die Stehposition, ohne dabei auf fremde Hilfe (Muskelkraft anderer Hilfspersonen) angewiesen zu sein.

In der praktischen Anwendung zeigt sich jedoch, dass häufig durch Unachtsamkeit ein unbeabsichtigtes Betätigen derartiger Schalter bzw. Bedienelemente (z.B. Ergreifen der unter der Sitzfläche angeordneten Bedienelemente) zu einer ungewollten Auslösung der o.g. Effekte führt.

In diesen Fällen können Gegenstände (Bürobedarf, aber auch Wertsachen), die auf einer Tischplatte liegen, durch ein plötzliches, unbeabsichtigtes Auslösen nach oben katapultiert werden, oder durch unbeabsichtigte Schrägstellung vom Tisch herunterfallen und beschädigt werden.

Unangenehm ist weiterhin, dass durch eine solche unbeabsichtigte Betätigung eingestellte Sitzpositionen oder Schräg - bzw. Höhenstellungen von Tischplatten versehentlich verstellt werden können. Erneute Justierungen sind dann anschließend notwendig.

### Aufgabe der Erfindung

Es ist die Aufgabe der vorliegenden Erfindung, Mittel bereitzustellen, die ein unbeabsichtigtes Auslösen von Schaltern an Möbelstücken verhindern und ein einhändiges Bedienen des Schalters ermöglichen.

### Kurze Beschreibung der Erfindung

Diese Aufgabe wird gelöst durch einen Schalter an einem Möbelstück zum Auslösen einer Gasdruckfeder, mit einem Grundkörper und einem beweglich gelagerten Auslöser, der entgegen einer ersten Rückstellkraft von einer Ruhestellung in eine Auslösestellung bewegbar ist, wobei ein beweglich gelagertes Sicherungselement am Schalter angeordnet ist, das entgegen einer zweiten Rückstellkraft von einer Verriegelungsstellung in eine Freigabestellung bewegbar ist, wobei das Sicherungselement in der Verriegelungsstellung den Auslöser in der Ruhestellung verriegelt, und wobei der Schalter an einer Unterseite der Tischplatte befestigt ist.

Der Auslöser wird ohne aktiv betätigt zu werden immer durch die erste Rückstellkraft (z.B. als Folge einer ersten Rückstellfeder, eines Elastomerblocks oder in Folge von unter Spannung stehenden Seilzügen) selbsttätig in die Ruhestellung gebracht. Daher ist in der Ruhestellung des Schalters bzw. des Auslösers ohne Fremdeinwirkung zunächst keine Auslösung einer Funktion (Höhenverstellung, Schwenken) möglich. Ein unbeabsichtigtes Betätigen des Auslösers durch ein Bewegen des Auslösers in die Auslösestellung ist jedoch ebenfalls nicht möglich, da das Sicherungselement in der Ruhestellung des Auslösers immer selbsttätig anhand der zweiten Rückstellkraft (z.B. als Folge einer zweiten Rückstellfeder) in die verriegelnde Verriegelungsstellung gebracht wird. Eine Entriegelung des Auslösers durch ein manuelles Bewegen des Sicherungselements (z.B. Zurückschieben) in die Freigabestellung ist nur durch eine bewusste Betätigung und nicht mehr durch versehentliches Betätigen möglich. Somit sorgt der Einsatz eines erfindungsgemäßen Schalters für einen sicheren Betrieb, insbesondere im Bereich von Möbelstücken mit beweglichen Möbelteilen. Bei einem Nichtbetätigen oder Loslassen des Schalters geht der Schalter immer selbsttätig in die Ruhestellung.

Die kompakte Bauweise des erfindungsgemäßen Schalters ermöglicht es, den Schalter alleine mittels einer Hand zu benutzen. So ist es z.B. möglich, bei einer entsprechenden Anordnung des Sicherungselements im oder am Auslöser, das Sicherungselement zunächst mit den Fingern zu bewegen (z.B. Entriegelung des Auslösers durch ein Verschieben) und anschließend den Auslöser mit der Handfläche der gleichen Hand von der Ruhestellung in die Auslösestellung zu bewegen (z.B. durch ein Verschwenken). Die erste und zweite Rückstellkraft kann erfindungsgemäß auch manuell bewirkt werden.

### Bevorzugte Ausführungsformen der Erfindung

Besonders bevorzugt ist zunächst ein erfindungsgemäßer Schalter, der dadurch gekennzeichnet ist, dass ein aus dem Schalter austretender Seilzug bis hin zu der Gasdruckfeder geführt ist.

Eine weitere bevorzugte Ausführungsform des erfindungsgemäßen Schalters ist **dadurch gekennzeichnet, dass** das Sicherungselement am oder im Auslöser vorgesehen ist und dass das Sicherungselement in der Verriegelungsstellung zumindest über einen Teil eines Randabschnitts und/oder einen Vorsprung in zumindest einer Ausnehmung des Grundkörpers positioniert ist und dass der Teil des Randabschnitts und/oder der Vorsprung in der Freigabestellung außerhalb der Ausnehmung angeordnet ist. Ein Vorsprung am Sicherungselement und/oder eine entsprechende Ausnehmung am Grundkörper sind leicht und kostengünstig herstellbar (z.B. im Spritzgussverfahren falls der Schalter aus Kunststoffteilen gefertigt ist) und stellen eine sichere Verriegelung dar. Alternativ kann zum Verriegeln des Auslösers das Sicherungselement beweglich am Grundkörper gelagert sein und mit einem Vorsprung in eine Ausnehmung am Auslöser eingreifen.

Eine weitere bevorzugte Ausführungsform ist **dadurch gekennzeichnet, dass** das Sicherungselement verfahrbar am Auslöser gelagert ist. Somit sind die beiden beweglichen Teile des Schalters (Auslöser und Sicherungselement) räumlich kompakt bzw. unweit voneinander angeordnet. Dadurch ist insbesondere eine einhändige Betätigung des erfindungemäßen Schalters möglich. Die Bewegung des Sicherungselements (von der Verriegelungsstellung in die Freigabestellung und umgekehrt) kann alternativ z.B. durch eine Drehung, ein Verschwenken oder ein lineares Verfahren erfolgen. Der Auslöser kann ebenfalls von der Ruhestellung in die Auslösestellung z.B. geschoben, geschwenkt oder gedreht werden.

Besonders bevorzugt ist weiterhin eine Ausführungsform, bei der der Schalter zur Bewirkung der ersten und/oder der zweiten Rückstellkraft jeweils mindestens ein Federelement aufweist. Federelemente sind kostengünstige Konstruktionselemente, die ein Zurückfahren des Auslösers von der Auslösestellung in die Ruhestellung (erste Rückstellkraft) bzw. ein Zurückfahren des Sicherungselements von der Freigabestellung in die Verriegelungsstellung (zweite Rückstellkraft) sicherstellen. Somit ist gewährleistet, dass ohne eine zusätzliche manuelle Einwirkung auf den Schalter stets die Ruhestellung des Auslösers eingenommen wird. In der Regel ist als Federelement eine Wendelfeder (auch Spiralfeder) zwischen dem Auslöser und dem verfahrbaren Sicherungselement vorgespannt. Die Vorspannung drückt das Sicherungselement dabei in der Ruhestellung des Auslösers in die Ausnehmung des Grundkörpers, sodass der Auslöser verriegelt ist.

Besonders bevorzugt ist weiterhin eine Ausführungsform, bei der der Auslöser als Taster, insbesondere als Flachtaster ausgebildet ist, und bei der das Sicherungselement als Sicherungsplatte ausgebildet ist. Die flächige Form von Taster bzw. Flachtaster und Sicherungsplatte begünstigt die Betätigung des erfindungsgemäßen Schalters mit einer Hand. Bei entsprechender Größe des Tasters und der Sicherungsplatte können diese z.B. beim Verschwenken einer Tischplatte mit den vier Fingern einer Hand betätigt werden. Dabei ist der erfindungsgemäße Schalter dann typischerweise an der Tischplattenunterseite angeordnet und befestigt, sodass der Bediener sich einerseits mittels des Daumens an der Tischplattenoberseite abstützen kann und sich andererseits (Tischplattenunterseite) über die vier restlichen Finger der gleichen Hand den Taster bzw. die Sicherungsplatte ergreifen kann. Die Mittelebene der Sicherungsplatte bewegt sich vorteilhafterweise innerhalb des Flachtasters, wodurch eine verbesserte ergonomische Bauweise des Schalters erreichbar ist.

Bei einer Weiterbildung der vorhergehenden Ausführungsform weist die Sicherungsplatte eine Fingerleiste auf. Somit kann der erfindungsgemäße Schalter besonders feinfühlig und sicher betätigt werden.

Besonders bevorzugt ist auch eine Ausführungsform, bei der die erste und/oder die zweite Rückstellkraft manuell überwindbar ist. Dies ermöglicht die Handhabung des erfindungsgemäßen Schalters ohne große Anstrengungen, insbesondere sind dadurch nicht mehrere Personen zur Bedienung des Schalters notwendig, sondern eine einzige Person kann den Schalter alleine betätigen.

Weiterhin bevorzugt ist eine Ausführungsform, bei der eine erste Bewegungsrichtung des Auslösers und eine zweite Bewegungsrichtung des Sicherungselementes zueinander nahezu senkrecht verlaufen. Somit ist mit an Sicherheit grenzender Wahrscheinlichkeit ausgeschlossen, dass eine unbewusste, gleichzeitige Betätigung sowohl des Sicherungselements als auch des Auslösers erfolgen kann. Dies ist darin begründet, dass eine unbewusste Bewegung niemals zuerst in eine erste Richtung und anschließend eine zweite, sich von der ersten stark unterscheidende Richtung erfolgt.

In den Rahmen der Erfindung fällt darüber hinaus die Verwendung eines erfindungsgemäßen Schalters zum Auslösen einer Gasdruckfeder in und/oder an Möbelstücken.

Weitere Vorteile der Erfindung ergeben sich aus der Beschreibung und der Zeichnung. Ebenso können die vorstehend genannten und die noch weiter ausgeführten Merkmale erfindungsgemäß jeweils einzeln für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

### Zeichnung und detaillierte Beschreibung der Erfindung

Die Erfindung ist in den Zeichnungen dargestellt und wird anhand von Ausführungsbeispielen näher erläutert. Es zeigt:
- Fig. 1: eine perspektivische Ansicht eines erfindungsgemäßen Schalters;
- Fig. 2: einen Ausschnitt eines Querschnitts durch den Schalter aus Fig.1;
- Fig. 3: einen Ausschnitt eines Querschnitts durch den Schalter aus Fig.1, wobei ein Auslöser erfindungsgemäß entriegelt bzw. freigegeben ist;
- Fig. 4: einen Ausschnitt eines Querschnitts durch den Schalter aus Fig.1, wobei der Auslöser erfindungsgemäß entsichert und in eine Auslösestellung verschwenkt ist;
- Fig. 5: eine perspektivische Ansicht des erfindungsgemäßen Schalters aus Fig.2;
- Fig. 6: eine perspektivische Ansicht des erfindungsgemäßen Schalters aus Fig.3; und
- Fig. 7: eine perspektivische Ansicht des erfindungsgemäßen Schalters aus Fig.4.

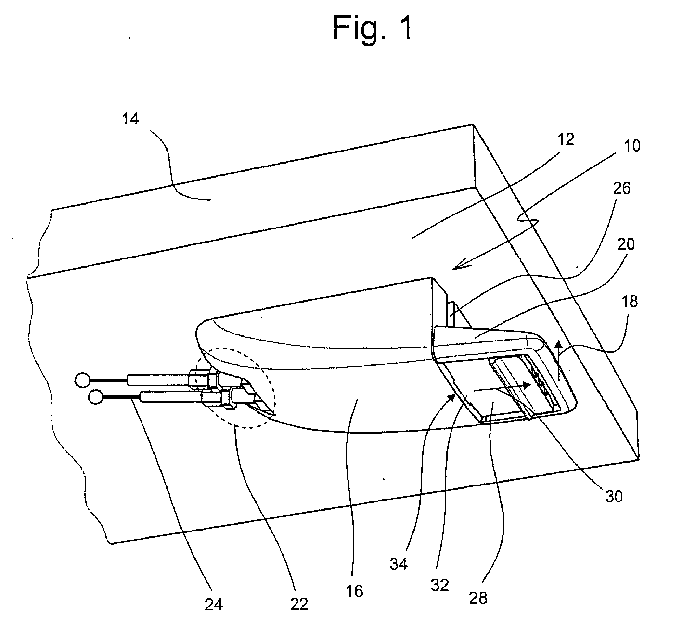

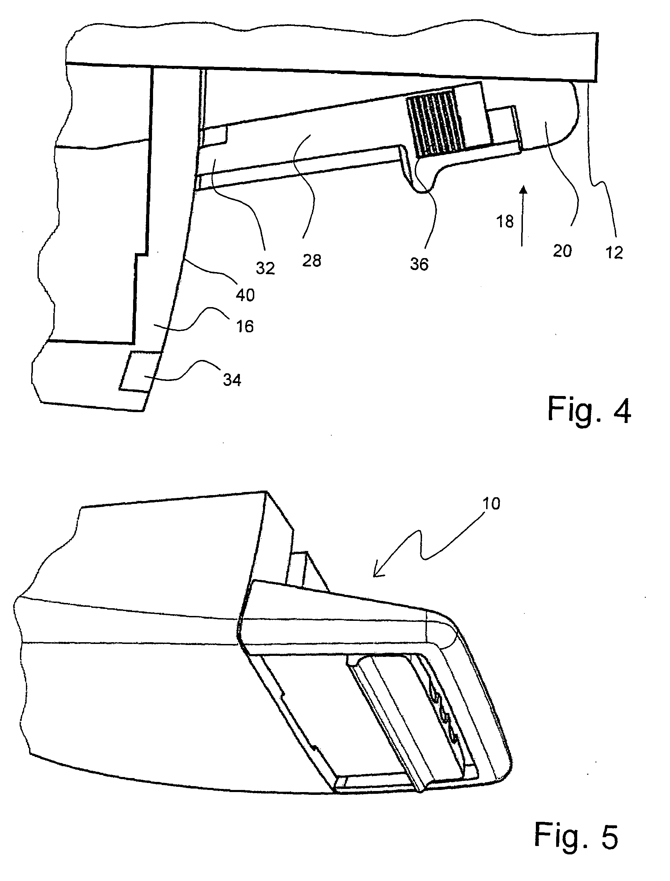

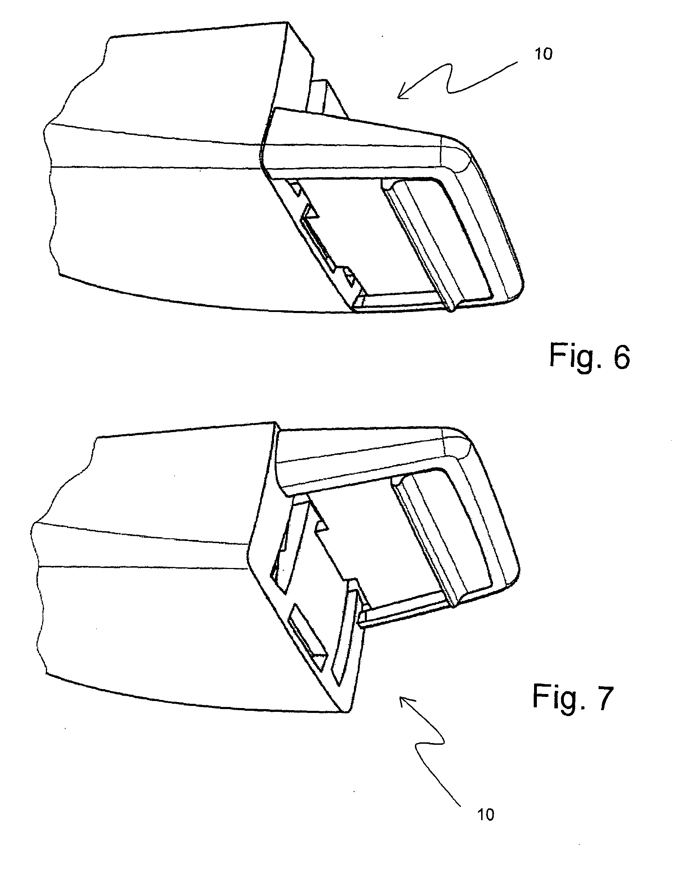

In der **Figur 1** ist mit 10 ein Schalter bezeichnet, der an der Unterseite 12 einer Tischplatte 14 befestigt ist und der einen Grundkörper 16 sowie einen in einer ersten Richtung 18 (und auch in der entsprechenden Gegenrichtung) verschwenkbaren Auslöser 20 aufweist. Der Auslöser 20 befindet sich in der Fig.1 in einer Ruhestellung, sodass im hinteren Bereich 22 des Grundkörpers 16 austretende Seilzüge 24 (mindestens ein Seilzug oder ein Gestänge) entspannt bzw. entsprechende Leitungssysteme deaktiviert bleiben. Die Seilzüge 24 sind bis hin zu (nicht dargestellten) Gasdruckfedern geführt, die eine Bewegung der Tischplatte 14 (Höhenverstellung und/oder Verschwenken) gegenüber einer (nicht dargestellten) Tischunterkonstruktion ermöglichen. Durch ein Betätigen des Auslösers 20, d.h. ein Verschwenken des Auslösers 20 in der ersten Richtung 18 (vgl. Fig. 4, Fig. 7) werden die Seilzüge 24 gespannt und die Gasdruckfeder aktiviert. Das Verschwenken des Auslösers 20 in der Richtung 18 wird durch Führungen 26 im Grundkörper 16 unterstützt.

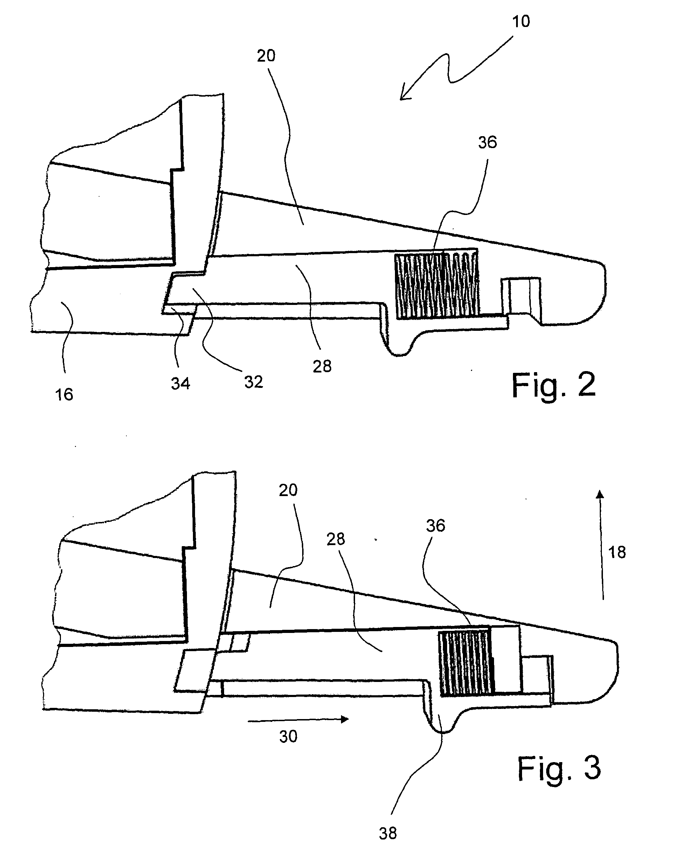

Um ein unbeabsichtigtes Betätigen des Auslösers 20 zu verhindern, ist im Auslöser 20 ein Sicherungselement 28 (z.B. eine Sicherheitsplatte) entlang einer zweiten Richtung 30 (und auch in der entsprechenden Gegenrichtung) verfahrbar gelagert. Das Sicherungselement 28 kann von der in der Fig. 1 dargestellten Verriegelungsstellung in eine Freigabestellung (vgl. Fig. 3, Fig. 6) geschoben werden, wodurch ein Vorsprung 32, der an dem Sicherungselement 28 ausgebildet ist, aus einer Ausnehmung 34, die an dem Grundkörper 16 ausgebildet ist, herausgefahren wird (Freigabe des Auslösers 20).

Die **Figur 2** zeigt die Verriegelungsstellung des Sicherungselements 28, die gleichzeitig der Ruhestellung des Auslösers 20 entspricht. Durch die Darstellung im Querschnitt ist eine zweite Rückstellfeder 36 (Wendelfeder) ersichtlich, die unter Vorspannung das Sicherungselement 28 gegen den Grundkörper 16 drückt. Damit dringt der Vorsprung 32 des Sicherungselements 28 in der Ruhestellung des Auslösers 20 in die Ausnehmung 34 des Grundkörpers 16 ein und verriegelt bzw. sichert somit den Schalter 10 gegen unbeabsichtigtes Betätigen bzw. Verschwenken.

Die **Figur 3** zeigt im Querschnitt den Auslöser 20 in seiner Ruhestellung sowie das Sicherungselement 28 in der Freigabestellung. Der Auslöser 20 ist somit entriegelt oder freigegeben und kann in der ersten Richtung 18 in die Auslösestellung verschwenkt werden (vgl. Fig. 4, Fig. 7). Zum Verschwenken des Auslösers 20 in die Auslösestellung muss entweder die Rückstellkraft einer ersten (nicht dargestellten) Rückstellfeder oder die Rückstellkraft von (nicht dargestellten) Seilzügen überwunden werden. Die zweite Rückstellfeder 36 ist in der Freigabestellung maximal eingedrückt, nachdem das Sicherungselement 28 in die zweite Richtung 30 bewegt wurde. Um das Sicherungselement 28 von Hand besser bewegen zu können, weist das Sicherungselement 28 eine Fingerleiste 38 auf.

Die **Figur 4** zeigt im Querschnitt den Auslöser 20 in der Auslösestellung und das Sicherungselement 28 in der Freigabestellung. Dabei ist der Auslöser 20 maximal bis an die Tischplattenunterseite 12 verschwenkt und die zweite Rückstellfeder 36 maximal eingedrückt. Die Stärke der zweiten Rückstellfeder 36 ist ausreichend hoch, um das Sicherungselement 28 bzw. den Vorsprung 32 selbsttätig in die Ausnehmung 34 zu drücken (Fig.2), ein Verschwenken des Auslösers 20 in der ersten Richtung 18 wird jedoch durch den Druck des Vorsprungs 32 auf den Grundkörper 16 nicht behindert. Der Vorsprung 32 kann während des Verschwenkens von der Ruhestellung in die Auslösestellung entlang einer Grundkörperseite 40 unbehindert entlang gleiten.

Die **Figuren 5****,** **6** und **7** zeigen perspektivische Ansichten des Schalters 10, wie sie den Figuren 2, 3, und 4 entsprechen.

Zusammenfassend betrifft die Erfindung einen Schalter 10 zum Auslösen eines Schaltvorgangs, insbesondere zum Auslösen einer Gasdruckfeder an und/oder in Möbelstücken, mit einem Grundkörper 16 und einem beweglich gelagerten Auslöser 20, der entgegen einer ersten Rückstellkraft von einer Ruhestellung in eine Auslösestellung bewegbar ist, wobei ein beweglich gelagertes Sicherungselement 28 am Schalter 10 angeordnet ist, das entgegen einer zweiten Rückstellkraft von einer Verriegelungsstellung in eine Freigabestellung bewegbar ist, wobei das Sicherungselement 28 in der Verriegelungsstellung den Auslöser 20 in der Ruhestellung verriegelt. Durch den erfindungsgemäßen Schalter 10 ist ein unbeabsichtigtes Betätigen des Auslösers 20 nicht möglich, sodass eine sichere Benutzung des Schalters gewährleistet ist.

## Patentansprüche

1. Schalter (10) an einem Möbelstück zum Auslösen einer Gasdruckfeder, mit einem Grundkörper (16) und einem beweglich gelagerten Auslöser (20), der entgegen einer ersten Rückstellkraft von einer Ruhestellung in eine Auslösestellung bewegbar ist, wobei ein beweglich gelagertes Sicherungselement (28) am Schalter (10) angeordnet ist, das entgegen einer zweiten Rückstellkraft von einer Verriegelungsstellung in eine Freigabestellung bewegbar ist, wobei das Sicherungselement (28) in der Verriegelungsstellung den Auslöser (20) in der Ruhestellung verriegelt, und wobei der Schalter (10) an einer Unterseite (12) der Tischplatte (14) befestigt ist.

2. Schalter (10) nach Anspruch 1, **dadurch gekennzeichnet, dass** ein aus dem Schalter (10) austretender Seilzug (24) bis hin zu der Gasdruckfeder geführt ist.

3. Schalter (10) nach Anspruch 1 oder 2, **dadurch gekennzeichnet, dass** das Sicherungselement (28) am oder im Auslöser (20) vorgesehen ist und dass das Sicherungselement (28) in der Verriegelungsstellung zumindest über einen Teil eines Randabschnitts und/oder einen Vorsprung (32) in zumindest einer Ausnehmung (34) des Grundkörpers (16) positioniert ist und dass der Teil des Randabschnitts und/oder der Vorsprung (32) in der Freigabestellung außerhalb der Ausnehmung (34) angeordnet ist.

4. Schalter (10) nach einem der vorhergehenden Ansprüche, **dadurch gekennzeichnet, dass** das Sicherungselement (28) verfahrbar am Auslöser (20) gelagert ist.

5. Schalter (10) nach einem der vorhergehenden Ansprüche, **dadurch gekennzeichnet, dass** der Schalter (10) zur Bewirkung der ersten und/oder der zweiten Rückstellkraft jeweils mindestens ein Federelement (36) aufweist.

6. Schalter (10) nach einem der vorhergehenden Ansprüche, **dadurch gekennzeichnet, dass** der Auslöser (20) als Taster, insbesondere als Flachtaster ausgebildet ist, und dass das Sicherungselement (28) als Sicherungsplatte ausgebildet ist.

7. Schalter (10) nach Anspruch 6, **dadurch gekennzeichnet, dass** die Sicherungsplatte eine Fingerleiste (38) aufweist.

8. Schalter (10) nach einem der vorhergehenden Ansprüche, **dadurch gekennzeichnet, dass** die erste und/oder die zweite Rückstellkraft manuell überwindbar ist.

9. Schalter (10) nach einem der vorhergehenden Ansprüche, **dadurch gekennzeichnet, dass** eine erste Bewegungsrichtung (18) des Auslösers (20) und eine zweite Bewegungsrichtung (30) des Sicherungselementes (28) zueinander nahezu senkrecht verlaufen.

10. Verwendung eines Schalters (10) nach einem der vorhergehenden Ansprüche zum Auslösen einer Gasdruckfeder in und/oder an Möbelstücken.
